# EUROPEAN PATENT SPECIFICATION

(11) **EP 4 180 324 B1**
(45) Date of publication and mention of the grant of the patent: **12.08.2026**
(21) Application number: 21275158.0
(22) Date of filing: 16.11.2021
(51) Int. Cl.: B64C 13/28, B64C 3/56, B64C 9/02, F16H 1/00

(54) **ATTACHMENT FOR ROTARY ACTUATOR**
BEFESTIGUNG FÜR EINEN DREHANTRIEB
FIXATION POUR ACTIONNEUR ROTATIF

(43) Date of publication of application: 17.05.2023
(73) Proprietor: Goodrich Actuation Systems Limited, Solihull, West Midlands B90 4SS (GB)
(72) Inventor: HARRISON, Colin R., Wolverhampton, WV3 7EB (GB); DARBY, Jonathan A., Westlands, ST5 2HB (GB)
(74) Representative: Casalonga

(56) References cited:
- EP-A1- 3 032 725
- EP-A2- 1 475 305
- DE-A1- 102014 007 266
- US-A- 5 518 466
- US-A- 5 558 299

## Description

### TECHNICAL FIELD

The present disclosure is concerned with means for mounting or attaching a rotary actuator to a wing assembly of an aircraft.

### BACKGROUND

Modern aircraft include a number of movable surface or panels such as flight control surface of wing tips that are configured to be movable relative to another part of the aircraft e.g. to another, fixed or stationary part of a wing. The movable parts are typically moved relative to the stationary part by means of an actuator. In applications where it is important to minimise weight and size of parts on an aircraft, rotary actuators are used comprising a fixed stator part and a movable rotor part. Rotary geared actuators (RGAs) have been developed in which the input and the output are linked by a series of gears to step down high speed, low torque rotation to provide slower speed, high torque positioning of a movable part. These actuators are typically positioned along the hinge line between a stationary part of the structure e.g. wing, and a relatively rotatable part. The RGA has so called earth members for fixing the actuator to one of the parts and output members for attachment to the other part. Typically, the earth members are attached to the stationary part of the structure and are mounted via flanges and bolts. The output members are then attached to the movable part also by known attachment means such as bolts or the like.

The attachment lugs and mounts required to attach the earth members to the wing structure and to attach the output members to the moveable part (or vice versa) add to the overall size and weight of the actuator assembly and the envelope required to accommodate the assembly. Where space and weight allowance is limited. Such as in aircraft, there is a desire to reduce the size and weight of mounting/attachment components whilst maintaining the required secure attachment.

In addition, attaching an RGA to the structure is generally time and labour intensive and as each lug/fixing mechanism needs to be fastened securely by hand, there is a risk of human error each time.

Furthermore, each attachment point where a lug or the like is fastened to the structure, is subject to loads that cause local stresses particularly during flight and during operation that can loosen or damage the fastening. Such assemblies are disclosed in EP 1 475 305 A2. DE 10 2014 007 266 A1 discloses a cylindrical high load gearbox e.g. a side-attached geared rotary actuator, for use in a high lift carrier of a flap unit of an airplane.

There is, therefore, a need for an improved way of securing an RGA to a structure whilst maintaining secure attachment.

### SUMMARY

According to the present disclosure, there is provided a mounting assembly as defined in claim 1.

### BRIEF DESCRIPTION

Figure 1 shows a typical rotary actuator with a conventional attachment mechanism.
Figure 2 shows an example of the rotary actuator assembly according to the present disclosure.

### DETAILED DESCRIPTION

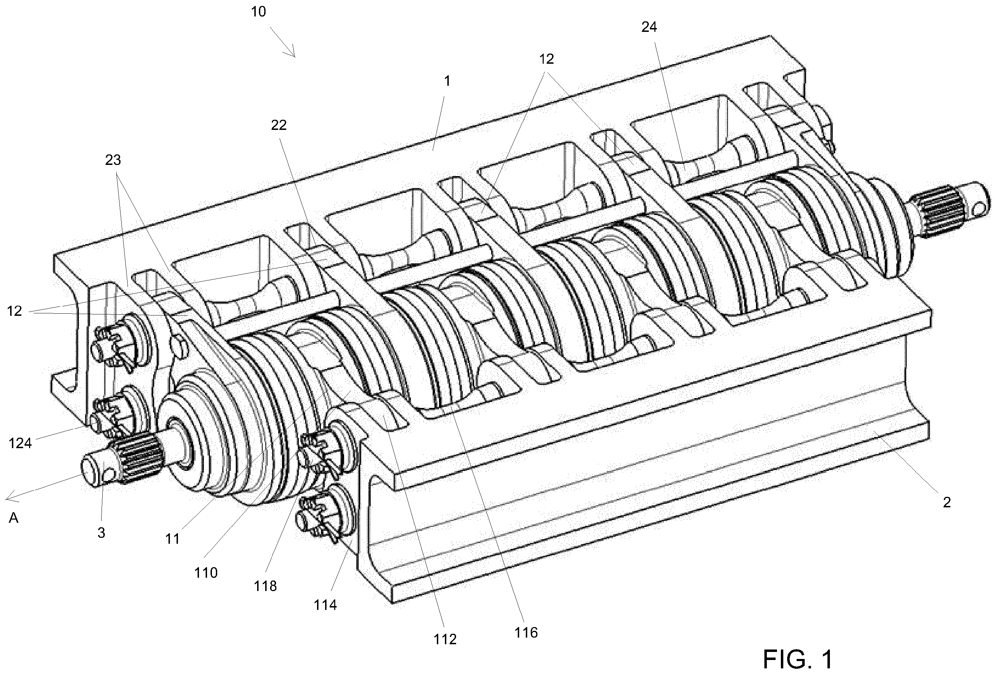

Figure 1 shows a rotary actuator 10 positioned between and attached to two relatively moveable parts 1,2 . Such as, but not limited to, a fixed wing structure 1 and a relatively movable part 2 e.g. a slat or flap or a foldable wing tip. The actuator can be any known type of rotary actuator having a stator part and a rotor part. Input rotation is provided to the actuator by a drive means such as a motor (not shown) that drives an input shaft 3. This causes rotation of the gears (not shown in detail) of the actuator which result in rotation of the rotor 11. The rotor 11 is fixed to the second relatively movable part 2. The actuator operation is known in the art and will not be described in any detail. The drawing is schematic only. Different types of rotary actuator are possible. With a geared actuator, as shown, the gears of the actuator operate such that the output rotor 11 rotates in response to, but at a different speed to the input rotation to cause relative rotation of the other part 2, to which the output rotor 11 is attached.

The rotary actuator extends axially along an axis A defined by the shaft 3 and the gears, earth members 12 and rotor 11 are arranged around the axis such that the rotor rotates about the axis. The earth members 12 are annular or circumferential rings mounted around the shaft 3 and several earth members 12 may be positioned around the actuator spaced apart in the axial direction. The number of earth members can be selected according to the use and design requirements of the actuator.

In a conventional arrangement, the actuator is mounted to the first relatively moveable part 1 via earth members 12 on the actuator. The earth members around the body of the actuator are secured to the wing part 1 in any known way by a fixed fastener such as a bolt attached to the earth member by an external housing (not shown). In the example shown, the earth members 12 are formed with radially extending lugs 22 with a hole therethrough. The lugs fit into attachment mounts 23 provided on the relatively movable part 1 which also have holes therethrough. The earth members are secured in positioned by passing a bolt 24 through the holes in the attachment mounts and the lugs. Each earth member may be provided with several lugs (two are shown for each earth member in the example of Fig. 1) and two bolts. A single bolt or rod can be passed through the whole row of earth members and secured by a fastener 124 at each end. It is also feasible that each lug and attachment mount pair could be fastened with a separate fastener.

Outlet members 110 are mounted around, and rotate with the rotor 11. The outlet members 110 may be provided at locations along the length of the actuator between earth members 12 but, again, the number and spacing of the outlet members will depend on specific design requirements. The outlet members 110 are arranged to be attached to the other of the relatively movable parts 2. As with the earth members 12, typically, the outlet members are provided with lugs 112 with holes therethrough which fit between mounting attachments 114 affixed to the second relatively movable part and one or more bolts 116 is passed through the matched-up holes to secure the outlet members to the relatively movable part. The bolts 116 can be secured by fasteners 116 either at each lug location or a single bolt passes through all lugs and is secured at its ends.

In this way, the earth members, which do not rotate with the actuator rotor, are fixed to one part of, say, the wing, and the relatively rotatable output members, that rotate with the actuator rotor 11, are attached to move the other part of the wing to rotate it relative to the first part.

As mentioned above, and as can be seen from Fig. 1, although the earth members, output members, lugs, attachment mounts and bolts do not actually contribute to the actuator function, they add substantially to required space envelope and to the overall weight of the assembly.

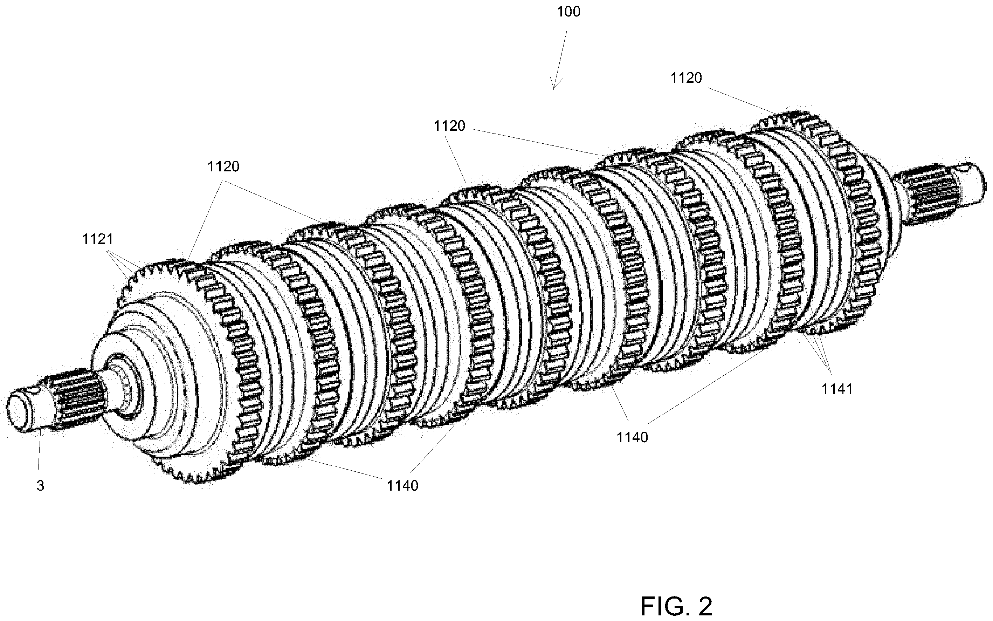

In the assembly according to this disclosure, an example of which is shown in Fig. 2, the mounting of the actuator with respect to the relatively movable parts, is by means of circumferential splines around the actuator instead of radially extending lugs and mounts and bolts therethough. This greatly simplifies assembling the actuator and also takes up less space and has reduced weight compared to the assembly shown in Fig. 1.

The general structure and function of the rotary actuator according to the disclosure is as described above and will not be described again herein. The difference lies in the way the actuator 100 is attached to the relatively moveable parts e.g. the wing parts.

Instead of the earth members having lugs, the earth members 1120 of the disclosure are provided with radially extending locking features e.g. splines 1121 around the circumference of the annular ring forming the earth member, the splines extending radially outwards. The splines 1121 are configured to engage with complementary splines (not shown) extending inwardly from a socket or sleeve (not shown) formed on the first relatively movable part e.g. the fixed wing part. Instead of splines, the locking features may take other forms that engage to provide the desired locking between the earth members and the receiving sleeve.

Similarly, the output members 1140 may be provided with similar splines 1141 around their circumference with will engage with complementary splines formed in a sleeve part provided on the other relatively movable part e.g. a movable wing panel.

In the example shown, all of the earth members 1120 and the output members 1140 are provided with splines. In other examples not falling within the scope of the claims, though, it may be that only some of the earth members and/or output members are provided with splines. For example, only the earth members might have a spline fitting with one wing part, while the output members have a conventional lug/mount fitting, or vice versa.

A sleeve for receiving the actuator will be defined by sleeve parts formed on or attached to the adjacent edges of the relatively movable parts i.e. the resulting sleeve formed by the sleeve parts will define the hinge between the two parts and will have inwardly extending splines. The actuator can then be pushed into the sleeve for assembly such that the splines on the earth members 1120 will engage with splines of the sleeve part attached to a fixed structure part and the splines on the output members will engage with splines on the other part of the sleeve that is affixed to the other part.

Once inserted in the sleeve, the actuator can be locked axially in position by any suitable means e.g. bolts, locking rings, caps etc.

Attaching the actuator to the relatively movable parts in this way allows the actuator to be easily mounted but ensures a secure attachment and reliable rotation operation. The fastening components have reduced size and weight compared to known mounting assemblies and spread the stress locations around the rings rather than providing single stress points at the lugs.

## Claims

1. A mounting assembly comprising a rotary actuator assembly for moving a first relatively movable part (1) relative to a second relatively movable part (2), the rotary actuator assembly comprising:
a rotary actuator (100) having an input shaft (3), the input shaft having:
a plurality of circumferential earth members (1120) for attachment to one of the first and the second relatively movable parts and a plurality of circumferential output members (1140) fixed to and extending from the input shaft for attachment to the other of the first and second relatively movable parts, and wherein the plurality of circumferential earth members and the plurality of circumferential output members are provided with radially outwardly extending locking features (1121, 1141) around their circumference;
the mounting assembly further comprising a mounting sleeve having a plurality of radially inwardly extending circumferential locking features positioned along the length of the sleeve, complementary to the radially outwardly extending locking features (1121, 1141), so as to engage with the radially outwardly extending locking features of the rotary actuator assembly when the rotary actuator assembly is inserted in the mounting sleeve; and wherein the mounting sleeve comprises a first sleeve part for attachment to the first relatively moveable part and a second sleeve part for attachment to the second relatively moveable part, the first and second sleeve parts cooperating to form the mounting sleeve into which the rotary actuator assembly is inserted.

2. The assembly of claim 1, wherein each circumferential output member is arranged in the axial direction of the actuator, between two earth members.

3. The assembly of any preceding claim, wherein the rotary actuator comprises a stator and a rotor rotatable about an input shaft (3).

4. The assembly of any preceding claim, wherein the rotary actuator is a rotary geared actuator.

5. The assembly of claim 3, wherein the earth members are attached to the stator and the output members are attached to and rotatable with the rotor.

6. The assembly of any preceding claim, wherein the locking features comprise splines.

7. The mounting assembly of any preceding claim, further comprising means for securing the actuator assembly axially within the mounting sleeve.

8. A wing assembly comprising a first wing part and a second wing part rotatable relative to the first wing part, and a mounting assembly as claimed in any preceding claim, where the first and second wing parts form the first and second relatively moveable parts.

9. A method of attaching a rotary actuator assembly of the assembly of any of claims 1 to 7, to the mounting sleeve, the method comprising inserting the rotary actuator assembly into the sleeve.

10. The method of claim 9, further comprising securing the rotary actuator assembly axially in position in the mounting sleeve.

## Patentansprüche

1. Montageanordnung, umfassend eine Drehbetätigungsanordnung zum Bewegen eines ersten relativ beweglichen Teils (1) in Bezug zu einem zweiten relativ beweglichen Teil (2), wobei die Drehbetätigungsanordnung umfasst:
eine Drehbetätigung (100), die eine Eingangswelle (3) aufweist, wobei die Eingangswelle aufweist:
eine Vielzahl umlaufender Erdungselemente (1120) zum Befestigen an einem der ersten und zweiten relativ beweglichen Teile, und eine Vielzahl umlaufender Ausgangselemente (1140), die an der Eingangswelle befestigt sind und sich daraus erstrecken, zum Befestigen an dem anderen von dem ersten und zweiten relativ beweglichen Teil, und wobei die Vielzahl umlaufender Erdungselemente und die Vielzahl umlaufender Ausgangselemente mit radial sich nach außen erstreckenden Verriegelungsmerkmalen (1121, 1141) um deren Umfang herum bereitgestellt sind;
wobei die Montageanordnung weiter eine Montagehülse umfasst, die eine Vielzahl von sich radial nach innen erstreckenden umlaufenden Verriegelungsmerkmalen aufweist, die entlang der Länge der Hülse positioniert sind, ergänzend zu den sich radial nach außen erstreckenden Verriegelungsmerkmalen (1121, 1141), um in die sich radial nach außen erstreckenden Verriegelungsmerkmale der Drehbetätigungsanordnung einzugreifen, wenn die Drehbetätigungsanordnung in die Montagehülse eingesetzt wird; und wobei die Montagehülse ein erstes Hülsenteil zum Befestigen am ersten relativ beweglichen Teil und ein zweites Hülsenteil zum Befestigen am zweiten relativ beweglichen Teil umfasst, wobei das erste und zweite Hülsenteil zusammenwirken, um die Montagehülse zu bilden, in welche die Drehbetätigungsanordnung eingesetzt wird.

2. Anordnung nach Anspruch 1, wobei jedes umlaufende Ausgangselement in axialer Richtung der Betätigungsvorrichtung zwischen zwei Erdungselementen angeordnet ist.

3. Anordnung nach einem vorstehenden Anspruch, wobei die Drehbetätigung einen Stator und einen um eine Eingangswelle (3) drehbaren Rotor umfasst.

4. Anordnung nach einem vorstehenden Anspruch, wobei die Drehbetätigung eine Drehgetriebebetätigung ist.

5. Anordnung nach Anspruch 3, wobei die Erdungselemente am Stator befestigt sind und die Ausgangselemente am Rotor befestigt, und mit dem Rotor drehbar sind.

6. Anordnung nach einem vorstehenden Anspruch, wobei die Verriegelungsmerkmale Verzahnungen umfassen.

7. Montageanordnung nach einem vorstehenden Anspruch, weiter umfassend Mittel zum axialen Sichern der Betätigungsanordnung innerhalb der Montagehülse.

8. Flügelanordnung, umfassend einen ersten Flügelteil und einen zweiten Flügelteil, der in Bezug zum ersten Flügelteil drehbar ist, und eine Montageanordnung nach einem vorstehenden Anspruch, wobei der erste und zweite Flügelteil die ersten und zweiten relativ beweglichen Teile bilden.

9. Verfahren zum Befestigen einer Drehbetätigungsanordnung der Anordnung nach einem der Ansprüche 1 bis 7 an der Montagehülse, wobei das Verfahren Einsetzen der Drehbetätigungsanordnung in die Hülse umfasst.

10. Verfahren nach Anspruch 9, weiter umfassend Sichern der Drehbetätigungsanordnung axial in Position in der Montagehülse.

## Revendications

1. Ensemble de montage comprenant un ensemble actionneur rotatif pour déplacer une première pièce relativement mobile (1) par rapport à une seconde pièce relativement mobile (2), l'ensemble actionneur rotatif comprenant :
un actionneur rotatif (100) présentant un arbre d'entrée (3), l'arbre d'entrée présentant :
une pluralité d'éléments de terre circonférentiels (1120) destinés à être fixés à l'une de la première et de la seconde pièce relativement mobile et une pluralité d'éléments de sortie circonférentiels (1140) fixés à et s'étendant à partir de l'arbre d'entrée pour être fixés à l'autre des première et seconde pièces relativement mobiles, et dans lequel la pluralité d'éléments de terre circonférentiels et la pluralité d'éléments de sortie circonférentiels sont pourvus de caractéristiques de verrouillage (1121, 1141) s'étendant radialement vers l'extérieur autour de leur circonférence ;
l'ensemble de montage comprenant en outre une douille de montage présentant une pluralité de caractéristiques de verrouillage circonférentielles s'étendant radialement vers l'intérieur, positionnées le long de la longueur de la douille, complémentaires aux caractéristiques de verrouillage (1121, 1141) s'étendant radialement vers l'extérieur, de manière à être en prise avec les caractéristiques de verrouillage s'étendant radialement vers l'extérieur de l'ensemble actionneur rotatif lorsque l'ensemble actionneur rotatif est inséré dans la douille de montage ; et dans lequel la douille de montage comprend une première partie de douille destinée à être fixée à la première pièce relativement mobile et une seconde partie de douille destinée à être fixée à la seconde pièce relativement mobile, les première et seconde parties de douille coopérant pour former la douille de montage dans laquelle l'ensemble actionneur rotatif est inséré.

2. Ensemble selon la revendication 1, dans lequel chaque élément de sortie circonférentiel est disposé dans la direction axiale de l'actionneur, entre deux éléments de terre.

3. Ensemble selon une quelconque revendication précédente, dans lequel l'actionneur rotatif comprend un stator et un rotor pouvant tourner autour d'un arbre d'entrée (3).

4. Ensemble selon une quelconque revendication précédente, dans lequel l'actionneur rotatif est un actionneur rotatif à engrenages.

5. Ensemble selon la revendication 3, dans lequel les éléments de terre sont fixés au stator et les éléments de sortie sont fixés au rotor et peuvent tourner avec le rotor.

6. Ensemble selon une quelconque revendication précédente, dans lequel les caractéristiques de verrouillage comprennent des cannelures.

7. Ensemble de montage selon une quelconque revendication précédente, comprenant en outre des moyens pour fixer l'ensemble actionneur axialement à l'intérieur de la douille de montage.

8. Ensemble aile comprenant une première partie d'aile et une seconde partie d'aile rotative par rapport à la première partie d'aile, et un ensemble de montage selon une quelconque revendication précédente, dans lequel les première et seconde parties d'aile forment les première et seconde pièces relativement mobiles.

9. Procédé de fixation d'un ensemble actionneur rotatif de l'ensemble selon l'une quelconque des revendications 1 à 7 à la douille de montage, le procédé comprenant l'insertion de l'ensemble actionneur rotatif dans la douille.

10. Procédé selon la revendication 9, comprenant en outre une fixation de l'ensemble actionneur rotatif axialement en position dans la douille de montage.
